# EUROPÄISCHE PATENTANMELDUNG

(11) **EP 4 495 051 A1**
(43) Veröffentlichungstag der Anmeldung: **22.01.2025**
(21) Anmeldenummer: 23186397.8
(22) Anmeldetag: 19.07.2023
(51) Int. Cl.: B66F 9/075, B66F 17/00, B62D 15/02

(54) **VERFAHREN ZUR BEHANDLUNG VON HINDERNISSEN IN EINEM FLURFÖRDERZEUG WÄHREND EINES FAHRBETRIEBS DAVON UND FLURFÖRDERZEUG**

(71) Anmelder: Jungheinrich Aktiengesellschaft, 22047 Hamburg (DE)
(72) Erfinder: QUICKERT, Steffen, 27793 Wildeshausen (DE); ALTMANN, Tony, 24616 Brokstedt (DE)
(74) Vertreter: Weickmann & Weickmann PartmbB

(57) **Zusammenfassung**

Die vorliegende Erfindung betrifft ein Verfahren zur Behandlung von Hindernissen (H) in einem Flurförderzeug (10) während eines Fahrbetriebs davon, umfassend die Schritte, während einer Fortbewegung des Flurförderzeugs (10) entlang einer Fortbewegungsrichtung, eines Erfassens der Umgebung des Flurförderzeugs (10) an wenigstens einer Seite senkrecht zu der Fortbewegungsrichtung mittels wenigstens einer Sensoreinheit (18), welche dazu eingerichtet ist, Objekte und jeweilige Abstände (y1) davon zu dem Flurförderzeug (10) zu bestimmen, eines Erfassens eines zurückgelegten Wegs mittels einer Wegbestimmungseinheit (20), bei einem Bestimmen eines Vorliegens eines Objekts, eines Speicherns des seitlichen Abstands (y1) des Objekts in einer Speichereinheit (26) und zumindest eine Information über die Position oder einen Positionsbereich des Objekts bezogen auf den zurückgelegten Weg des Flurförderzeugs (10), wobei das Speichern insbesondere für einen nicht durch die Sensoreinheit (18) erfassten Bereich der Umgebung des Flurförderzeugs (10) erfolgt, eines Bestimmens eines jeweiligen zulässigen maximalen Lenkwinkels zu wenigstens einem Teil der gespeicherten Objekte anhand der gespeicherten Abstände und einem vorbestimmten Bewegungsmodell des Flurförderzeugs (10), eines Auswählens des geringsten der zulässigen maximalen Lenk-winkel als kritischen Lenkwinkel, und eines Vergleichens des kritischen Lenkwinkels mit einem momentanen Lenkwinkel des Flurförderzeugs (10), welcher mittels eines Lenkwinkelsensors (22) bestimmt wird, und falls der momentane Lenkwinkel des Flurförderzeugs (10) größer als der kritische Lenkwinkel ist, Auslösen wenigstens einer vor-bestimmten Maßnahme. Ferner betrifft die Erfindung ein Flurförderzeug, welches zum Durchführen eines derartigen Verfahrens eingerichtet ist.

## Beschreibung

Die vorliegende Erfindung betrifft ein Verfahren zur Behandlung von Hindernissen in einem Flurförderzeug während eines Fahrbetriebs davon sowie ein Flurförderzeug, welches dazu eingerichtet ist, ein derartiges Verfahren während seines Fahrbetriebs durchzuführen.

Es ist wünschenswert, insbesondere in personengeführten Flurförderzeugen zur Unterstützung einer jeweiligen Bedienperson sowie zur Vermeidung von Kollisionen mit Hindernissen eine Erfassung der Umgebung des entsprechenden Flurförderzeugs mit hierzu geeigneten Sensoreinheiten durchzuführen und bei einer Gefahr einer Kollision mit einem auf diese Weise erkannten Hindernis eine Warnung an die Bedienperson auszugeben und/oder unmittelbar einen Eingriff in die Steuerung des Flurförderzeugs vorzunehmen, beispielsweise um ein Ausweichmanöver oder ein Abbremsen davon einzuleiten.

Zu diesem Zweck arbeiten aktuelle Systeme zur Warnung vor Objekten in Flurförderzeugen in der Regel mit Vorhersagen des Fahrwegs davon auf Grundlage einer aktuellen oder einer angenommenen maximalen Geschwindigkeit. Zudem wird für die Berechnung eines Blindbereichs, welcher zu bestimmten Zeitpunkten der Fortbewegung des Flurförderzeugs bezogen auf entsprechende Sensoreinheiten vorliegen kann, meist ein aufwändiger sogenannter "Occupancy Grid Mapping"-Algorithmus verwendet, mittels welchem die Positionen von Hindernissen in der Umgebung des Flurförderzeugs aufgenommen und gespeichert werden und durch einen Vergleich mit einem für die Zukunft angenommenen Fahrweg des Flurförderzeugs die Gefahr einer Kollision mit einem Hindernis ermittelt werden kann.

Hierbei zeigt sich jedoch, dass die bisher bekannten Systeme und Verfahren erst während einer Fahrt des entsprechenden Flurförderzeugs und/oder mit einer zu hohen Rate von falsch positiven Ermittlungen von potentiellen Gefahrensituationen auslösen, was für eine Bedienperson des entsprechenden Flurförderzeugs störend oder irritierend sein kann und die Betriebseffizienz des Flurförderzeugs senken kann. Alternativ benötigen die bisher verwendeten Systeme relativ hohe Ressourcen aufgrund der aufwändigen Berechnung von Belegungskarten der Umgebung des entsprechenden Flurförderzeugs sowie möglicher Kollisionen mit Hindernissen oder eine kostspielige sensorische Rundumüberwachung das Flurförderzeugs.

Es ist demzufolge die Aufgabe der vorliegenden Erfindung, ein einfaches Verfahren zur Behandlung von Hindernissen in einem Flurförderzeug während eines Fahrbetriebs davon bereitzustellen, bei dem auf eine aufwendige Sensorik möglichst verzichtet werden kann und das zunächst einmal eine Lenkwinkel-abhängige Erstellung einer Warnsystematik ermöglicht, die vor einer Kollision davon mit seitlich befindlichen Hindernissen schützt und hierbei einerseits falsch positive Erkennungen von potentiellen Gefahrensituationen und Kollisionen auf ein Minimum reduziert, während andererseits ein deutlich verringerter Ressourcenverbrauch bei der Berechnung möglicher Gefahrensituationen erzielt wird. Insbesondere soll eine vorbestimmte Maßnahme, wie beispielsweise eine Warnung für die Bedienperson des Flurförderzeugs, genau dann ausgelöst werden, wenn ein Lenkwinkel eingeschlagen wird, der potentiell zu einer Kollision mit einem Objekt an der Seite des Flurförderzeugs führen könnte. Hierzu sollen insbesondere Objekte im Blindbereich entsprechender Sensoreinheiten berücksichtigt werden und ein möglichst geringer Ressourcenverbrauch hinsichtlich eines Berechnungsaufwands erzielt werden.

Zur Lösung dieser Aufgabe umfasst das erfindungsgemäße Verfahren die Schritte, während einer Fortbewegung des Flurförderzeugs entlang einer Fortbewegungsrichtung, eines Erfassens der Umgebung des Flurförderzeugs an wenigstens einer Seite senkrecht zu der Fortbewegungsrichtung mittels wenigstens einer Sensoreinheit, welche dazu eingerichtet ist, Objekte und jeweilige Abstände davon zu dem Flurförderzeug zu bestimmen, eines Erfassens eines zurückgelegten Wegs mittels einer Wegbestimmungseinheit, und bei einem Bestimmen eines Vorliegens eines Objekts eines Speicherns des seitlichen Abstands des Objekts in einer Speichereinheit und zumindest eine Information über die Position oder einen Positionsbereich des Objekts bezogen auf den zurückgelegten Weg des Flurförderzeugs, wobei das Speichern insbesondere für einen nicht durch die Sensoreinheit erfassten Bereich der Umgebung des Flurförderzeugs erfolgt, eines Bestimmens eines jeweiligen zulässigen maximalen Lenkwinkels zu wenigstens einem Teil der bestimmten Objekte anhand der gespeicherten Abstände und einem vorbestimmten Bewegungsmodell des Flurförderzeugs, eines Auswählens des geringsten der zulässigen maximalen Lenkwinkel als kritischen Lenkwinkel und eines Vergleichens des kritischen Lenkwinkels mit einem momentanen Lenkwinkel des Flurförderzeugs, welcher mittels eines Lenkwinkelsensors bestimmt wird, wobei, falls der momentane Lenkwinkel des Flurförderzeugs größer als der kritische Lenkwinkel ist, wenigstens eine vorbestimmte Maßnahme ausgelöst wird.

Demzufolge wird in dem erfindungsgemäßen Verfahren zu jedem Zeitpunkt lediglich ein kleiner Sektor rechts und/oder links des Fahrzeugs in Betracht gezogen und wenn in diesem Sektor ein Hindernis auftritt, wird der Abstand zu diesem Hindernis in der Speichereinheit gespeichert. Hierbei ist selbstverständlich denkbar, die entsprechende Erfassung beispielsweise auch schräg vor dem Fahrzeug vorzunehmen und die Position eines erkannten Hindernisses entsprechend hinsichtlich seines Abstands senkrecht zu dem Fahrzeug bezogen auf die Fortbewegungsrichtung in einer geeigneten Weise abzuleiten. Dementsprechend ist die Erfassung der Umgebung des Flurförderzeugs an einer Seite senkrecht zu der Fortbewegungsrichtung derart zu verstehen, dass ein Bereich erfasst wird, welcher nicht unmittelbar von dem Fahrzeug überfahren wird, sondern seitlich des von dem Fahrzeug überstrichenen Bereichs liegt. Mit anderen Worten werden also Objekte im Erfassungsbereich der Sensoreinheit detektiert und für diese der seitliche Abstand zum Fahrzeug und zusätzlich eine Information über die Position oder einen Positionsbereich des Objekts bezogen auf den zurückgelegten Weg des Flurförderzeugs ermittelt, sodass während der Bewegung des Flurförderzeugs, wenn sich die erfassten Objekte in den Blindbereich des Sensors hineinbewegen, deren Position bezogen auf den aktuellen Aufenthaltsort des Flurförderzeugs gespeichert ist und bei der Überprüfung der Bewegung des Flurförderzeugs hinsichtlich potentieller Kollisionen berücksichtigt werden kann.

Weiterhin ist das Verfahrensmerkmal, dass zu wenigstens einem Teil der bestimmten Objekte ein zulässiger maximaler Lenkwinkel zu bestimmen ist, derart zu verstehen, dass unter gewissen Umständen auch ermittelt werden kann, dass einzelne der bestimmten Objekte für das weitere Verfahren nicht relevant sind. Ein derartiger Fall kann beispielsweise gegeben sein, wenn zwei bezogen auf den seitlichen Abstand im Wesentlichen hintereinander liegende Objekte detektiert werden und demzufolge lediglich das dem Fahrzeug nächste für eine Ermittlung eines entsprechenden zulässigen Lenkwinkels zu betrachten ist. In solchen Fällen könnten die als nicht relevant eingestuften Objekte bereits zu einem frühen Zeitpunkt des Verfahrens verworfen werden, um die Verfahrenseffizienz weiter zu erhöhen.

Auf diese Weise wird also in einer einfachen und ressourcenschonenden Weise ermöglicht, für jedes der bestimmten Objekte anhand der gespeicherten Abstände einen zulässigen maximalen Lenkwinkel zu bestimmen, wobei anschließend aus sämtlichen derart ermittelten zulässigen maximalen Lenkwinkeln ein kritischer Lenkwinkel abgeleitet und mit einem momentanen Lenkwinkel des Flurförderzeugs verglichen werden kann, um mögliche Gefahrensituationen des Flurförderzeugs frühzeitig erfassen und entsprechende Gegenmaßnahmen einleiten zu können.

Insbesondere kann hierbei die Umgebung des Flurförderzeugs an der wenigstens einen Seite des Flurförderzeugs, insbesondere an beiden Seiten, in eine Mehrzahl von Abschnitten einer vorbestimmten Länge bezogen auf den zurückgelegten Weg als Positionsbereich unterteilt werden, für welche jeweils das Vorliegen eines Objekts und der entsprechende Abstand oder eine Abwesenheit eines Objekts bestimmt und ggf. gespeichert werden können. Die entsprechenden Abschnitte dienen somit als kleinste Einheiten, in welchen ein Hindernis vorliegen und erfasst werden kann, wobei durch eine derartige Unterteilung der Umgebung in linear aufeinanderfolgende Abschnitte eine erhebliche Verkleinerung des benötigten Speicher- und Berechnungsbedarfs und allgemein eine Vereinfachung des zugrundeliegenden Modells der Umgebung erzielt werden kann.

Wie bereits weiter oben in allgemeiner Form angedeutet, kann bei einem Bestimmen eines Vorliegens von mehreren Objekten innerhalb eines einzelnen Abschnitts im eben eingeführten konkreten Fall lediglich der Abstand des bezogen auf das Flurförderzeug am nächsten liegenden Objekts gespeichert werden, da lediglich dieses nächstliegende Objekt als für das Verfahren kritisch angesehen wird.

Alternativ oder zusätzlich kann, sobald der zurückgelegte Weg bezogen auf ein bestimmtes Objekt eine Länge des Flurförderzeugs übersteigt, dieses Objekt aus der Speichereinheit gelöscht werden. Auf diese Weise wirkt die Speichereinheit als ein Puffer, in welchem lediglich Informationen über Objekte vorgehalten werden, welche sich bezogen auf die Fahrtrichtung noch im Bereich des Flurförderzeugs befinden, während Daten aus der Vergangenheit über bereits passierte Objekte unmittelbar gelöscht werden können. Durch diese Maßnahme wird eine erhebliche Reduzierung des benötigten Speicher- und Berechnungsbedarfs erzielt, da insbesondere bei einer Unterteilung der Umgebung des Flurförderzeugs in eine Mehrzahl von Abschnitten in der eben beschriebenen Weise lediglich pro entsprechender Seite des Fahrzeugs die jeweilige Anzahl von Abschnitten zusammen mit einer zugeordneten Distanz eines möglicherweise vorliegenden Objekts beziehungsweise ein eine Abwesenheit eines Objekts repräsentierender Wert gespeichert, vorgehalten und bei der Bestimmung der jeweiligen zulässigen maximalen Lenkwinkel beachtet werden müssen.

Hierbei kann ferner zusätzlich vorgesehen sein, dass bei einer Umkehrung der Bewegungsrichtung des Fahrzeugs in ähnlicher Weise die nunmehr hinter dem Fahrzeug liegenden Objekte gleichermaßen aus der Speichereinheit gelöscht werden können, wenn der in Gegenrichtung zurückgelegte Weg bezogen auf diese Objekte ebenfalls eine Länge des Flurförderzeugs übersteigt bzw. sie nicht mehr im Längenbereich des Flurförderzeugs vorliegen.

Als weitere Maßnahme zur Vermeidung von falsch positiven Auslösevorgängen der wenigstens einen vorbestimmten Maßnahme bzw. zur Reduktion des Aufwands bei der Ermittlung von möglichen Kollisionsereignissen kann vorgesehen sein, ein Filtern der bestimmten Objekte anhand geometrischer Eigenschaften des Flurförderzeugs vorzunehmen. Insbesondere kann für dieses Filtern an der entsprechenden Seite des Flurförderzeugs ein Viertelkreis konstruiert werden, wobei der Mittelpunkt des Viertelkreises durch einen Schnittpunkt einer Außenkante des Flurförderzeugs und einer senkrechten Projektion zu einem Drehpunkt des Flurförderzeugs bestimmt werden kann und als Radius ein Abstand dieses Mittelpunkts zu einem vorderen Außenpunkt des Flurförderzeugs dient. Lediglich innerhalb dieses Radius können demzufolge erfasste Objekte als gültig bzw. zu berücksichtigen angenommen werden.

Weiterhin kann als das vorbestimmte Bewegungsmodel des Flurförderzeugs ein Einspur-Modell verwendet werden, wobei ungeachtet des verwendeten Bewegungsmodells ein zulässiger maximaler Lenkwinkel für ein bestimmtes Objekt jeweils derart bestimmt werden kann, dass der entsprechend berechnete Fahrweg des Flurförderzeugs für die Zukunft unabhängig von der momentanen Geschwindigkeit des Flurförderzeugs das entsprechende Objekt in einer Draufsicht gerade nicht mehr überlappt.

Wie bereits weiter oben angedeutet, kann das Auslösen der wenigstens einen vorbestimmten Maßnahme eine Benachrichtigung einer Bedienperson des Flurförderzeugs mittels einer entsprechenden Benachrichtigungseinheit und/oder einen Steuer- und/oder Bremseingriff des Flurförderzeugs umfassen. Auf diese Weise kann dementsprechend durch einen auf die Benachrichtigung folgenden manuellen Eingriff oder einen automatisierten Eingriff in die Steuerung bzw. Bremsvorrichtung des Flurförderzeugs in geeigneter Weise einer Kollision mit einem der festgestellten Objekte entgegengewirkt werden.

Gemäß einem zweiten Aspekt betrifft die vorliegende Erfindung ein Flurförderzeug, umfassend einen Fahrzeugkörper mit wenigstens drei daran vorgesehenen Rädern, ein Lastaufnahmemittel, wenigstens eine Sensoreinheit, welche dazu eingerichtet ist, Objekte und jeweilige Abstände davon zu dem Flurförderzeug in einer Richtung senkrecht zu einer Haupt-Fortbewegungsrichtung zu bestimmen, eine Wegbestimmungseinheit, einen Lenkwinkelsensor und eine mit der wenigstens einen Sensoreinheit, der Wegbestimmungseinheit und dem Lenkwinkelsensor betriebsmäßig gekoppelte Steuereinheit, welcher eine Speichereinheit zugeordnet ist, wobei das Flurförderzeug dazu eingerichtet ist, ein Verfahren der eben beschriebenen Art durchzuführen.

Hierzu verarbeitet die Steuereinheit die von der Sensoreinheit, der Wegbestimmungseinheit und dem Lenkwinkelsensor zur Verfügung gestellten Daten in der oben im Zusammenhang mit dem erfindungsgemäßen Verfahren beschriebenen Weise, um eine entsprechende Behandlung von in der Umgebung des Flurförderzeugs festgestellten Hindernissen vornehmen zu können. Insbesondere kann die Steuereinheit mit einer ohnehin vorgesehenen zentralen Steuereinheit eines derartigen Flurförderzeugs betriebsmäßig gekoppelt oder integriert sein, wobei die zentrale Steuereinheit beispielsweise ferner weitere Funktionen des Flurförderzeugs kontrolliert und dementsprechend ohnehin auf gewisse Sensordaten bereits zurückgreifen kann.

Weiterhin kann das erfindungsgemäße Flurförderzeug ferner eine mit der Steuereinheit betriebsmäßig gekoppelte Benachrichtigungseinheit umfassen, welche dazu eingerichtet ist, als die wenigstens eine vorbestimmte Maßnahme eine Warnung an eine Bedienperson des Flurförderzeugs auszugeben und/oder die Steuereinheit kann ferner dazu eingerichtet sein, als die wenigstens eine vorbestimmte Maßnahme einen Steuer- und/oder Bremseingriff des Flurförderzeugs anzuweisen.

Zudem kann die wenigstens eine Sensoreinheit als ein Laserscanner ausgebildet ist, welcher vorzugsweise einen Bereich von etwa 180° bezogen auf die Haupt-Fortbewegungsrichtung des Flurförderzeugs, insbesondere symmetrisch bezogen auf diese Richtung, erfassen kann. Derartige Laserscanner führen eine entsprechende Erfassung der Umgebung in einer periodischen Weise mehrfach pro Sekunde durch, wobei eine mehrfache Erfassung eines Objekts zu einer Plausibilisierung oder einer Verbesserung einer Positionsbestimmung davon herangezogen werden kann. In einem solchen Fall wären dann dementsprechend die der Haupt-Fortbewegungsrichtung gegenüberliegenden 180°, insbesondere der Bereich hinter der Fahrzeugfront, als Blindbereich eines solchen Sensors anzusehen, in welchem durch die Anwendung des erfindungsgemäßen Verfahrens eine erhöhte Sicherheit vor einer Kollision mit einem Hindernis geschaffen wird.

Jedoch sind auch andere Ausgestaltungen von Sensoreinheiten in erfindungsgemäßen Flurförderzeugen denkbar, solange sie in der Lage sind, in der oben beschriebenen Weise eine Erfassung eines seitlichen Bereichs des Flurförderzeugs durchzuführen und Daten hinsichtlich des Abstands von erfassten Objekten zu dem Flurförderzeug zu liefern.

Weitere Merkmale und Vorteile der vorliegenden Erfindung werden aus der nachfolgenden Beschreibung einer Ausführungsform davon noch deutlicher, wenn diese zusammen mit den beiliegenden Figuren betrachtet wird. Diese zeigen im Einzelnen:
- Figuren 1A und 1B: eine schematische Ansicht eines erfindungsgemäßen Flurförderzeugs während eines Fahrbetriebs;
- Figur 2: eine schematische Ansicht zur Verdeutlichung eines Filterns von bestimmten Objekten;
- Figuren 3A bis 3D: jeweilige Ansichten zur Bestimmung eines kritischen Lenkwinkels des Flurförderzeugs; und
- Figur 4: ein schematisches Diagramm zur Veranschaulichung einer Verarbeitung der während des erfindungsgemäßen Verfahrens aufgenommenen Daten.

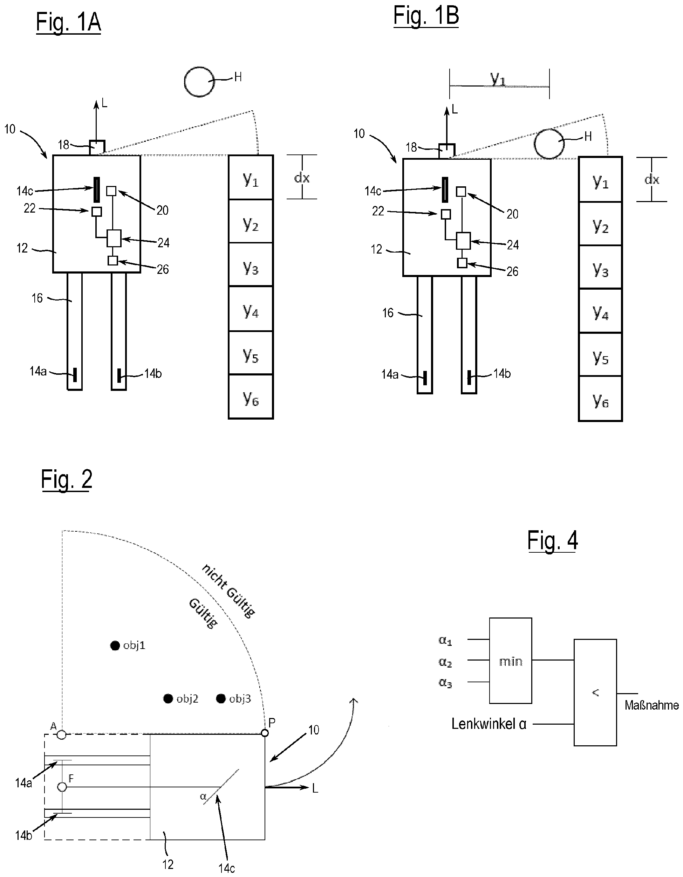

In den Figuren 1A bis 3D ist jeweils ein Flurförderzeug 10 gezeigt, welches zum Durchführen eines erfindungsgemäßen Verfahrens eingerichtet ist. Hierbei ist zu beachten, dass einige der im Folgenden diskutierten Komponenten des Flurförderzeugs aus Gründen der Übersichtlichkeit lediglich in den Figuren 1A und 1B dargestellt sind. Das Flurförderzeug 10 umfasst hierbei einen Fahrzeugkörper 12 mit drei daran vorgesehen Rädern 14a bis 14c und einem Lastaufnahmemittel 16 in Form einer vertikal verlagerbaren Lastgabel, wobei zwei Räder 14a und 14b im Bereich des Lastaufnahmemittels 16 angeordnet und nicht lenkbar sind, während ferner dem Fahrzeugkörper 12 das dritte Rad 14c zugeordnet ist, welches sowohl lenkbar als auch angetrieben ist.

Weiterhin umfasst das Flurförderzeug 10 eine Sensoreinheit 18, beispielsweise in Form eines an sich bekannten Laserscanners, welche in Hauptfahrrichtung L vorne an dem Fahrzeugkörper 12 vorgesehen und dazu eingerichtet ist, in der Umgebung des Flurförderzeugs 10 vorliegende Objekte in einem Bereich von etwa 180° und insbesondere auch seitlich bezogen auf die Haupt-Fortbewegungsrichtung L zu erfassen und ihre Abstände y davon zu dem Fahrzeug in der Richtung senkrecht zu der Haupt-Fortbewegungsrichtung L zu bestimmen. Hierbei sei erneut darauf hingewiesen, dass der Begriff "seitlich" an dieser Stelle derart zu verstehen ist, dass eine seitliche Erfassung von Objekten derart erfolgt, dass diese bevorzugt im Bereich vor dem Fahrzeug erfasst werden und im weiteren Verlauf bei einer Geradeausfahrt seitlich passiert werden, also bei Geradeausfahrt nicht mit dem Fahrzeug kollidieren.

Zudem umfasst das Flurförderzeug 10 eine Wegbestimmungseinheit 20 in Form einer Odometrieeinheit, welche beispielsweise eine Anzahl von Radumdrehungen des gelenkten und angetriebenen Rads 14c erfassen und über den bekannten Umfang des Rads 14c in eine zurückgelegte Strecke umrechnen kann, während ein Lenkwinkelsensor 22 ebenfalls dem gelenkten Rad 14c zugeordnet ist und dessen aktuellen Lenkwinkel gegenüber der Haupt-Fortbewegungsrichtung L ermitteln kann. Weiterhin umfasst das Flurförderzeug 10 eine Steuereinheit 24, welche mit der wenigstens einen Sensoreinheit 18, der Wegbestimmungseinheit 20 und dem Lenkwinkelsensor 22 betriebsmäßig gekoppelt ist und dazu eingerichtet ist, anhand der von diesen Einheiten gelieferten Daten das im Folgenden beschriebene erfindungsgemäße Verfahren durchzuführen.

Hierbei ist zunächst einmal in den Figuren 1A und 1B ein Zustand gezeigt, in welchem sich das Flurförderzeug 10 während einer Geradeausfahrt entlang seiner Haupt-Fortbewegungsrichtung L einem Hindernis H nähert, bzw. seitlich an diesem vorbeifährt. Hierbei wird durch die Sensoreinheit 18 der senkrechte Abstand y1 zu dem Hindernis H erfasst und in geeigneter Weise in einer der Steuereinheit 24 zugeordneten Speichereinheit 26 abgelegt. Hierbei ist in Figuren 1A und 1B angedeutet, dass hierbei eine Unterteilung der Umgebung des Flurförderzeugs 10 bezogen auf die Fortbewegungsrichtung in eine Mehrzahl von Abschnitten dx vorgenommen wird, in welchen jeweils ein Vorliegen eines Hindernisses bzw. Objekts erfasst werden kann, wobei dann im dementsprechenden Eintrag in der Speichereinheit 26 entweder der genannte Abstand y1 oder ein geeignetes Symbol zur Repräsentierung einer Abwesenheit eines Objekts eingetragen werden kann.

Demzufolge fungiert die Speichereinheit 26 an dieser Stelle als Eimerkette oder Puffer, wobei entsprechend eine endliche Anzahl von Einträgen in dem Puffer vorliegt, welche jeweils Hindernisse und entsprechende Abstände oder deren Abwesenheit repräsentieren können. Hierbei ist vorgesehen, dass sobald der zurückgelegte Weg bezogen auf ein erfasstes Objekt oder Hindernis die Länge des Flurförderzeugs 10 übersteigt, dieses Objekt aus der Speichereinheit 26 gelöscht werden kann, sodass stets lediglich ein Bereich an der Seite des Flurförderzeugs 10 hinsichtlich darin vorliegender Objekte in der Speichereinheit 26 hinterlegt ist, welcher einer Länge des Flurförderzeugs 10 entspricht. In gleicher Weise können selbstverständlich ebenfalls für die entgegengesetzte linke Seite des Fahrzeugs entsprechende Puffer vorgesehen sein.

Bei dem in Figuren 1A und 1B gezeigten Ausführungsbeispiel ist die Länge dx hierbei derart gewählt, dass die entsprechende Seite des Flurförderzeugs in sechs Abschnitte unterteilt ist, deren jeweilige Einträge in der Speichereinheit 26 dementsprechend jeweils einen Abstand y1 bis y6 oder ein Symbol enthalten können, welches eine Abwesenheit eines entsprechenden Objekts repräsentiert. Auf diese Weise wird ein erheblich verringerter Speicherbedarf verglichen mit aus dem Stand der Technik bekannten entsprechenden Verfahren erzielt.

In Figur 2 ist nunmehr ein Verfahren angedeutet, mittels welchem ein Filtern der bestimmten Objekte anhand geometrischer Eigenschaften des Flurförderzeugs 10 durchgeführt werden kann, wobei für das Filtern an der entsprechenden Seite des Flurförderzeugs 10 ein Viertelkreis konstruiert worden ist, dessen Mittelpunkt durch einen Schnittpunkt A einer Außenkante des Flurförderzeugs 10 und einer senkrechten Projektion zu einem entsprechend der Position der Räder 14a bis 14c konstruierten Drehpunkt F des Flurförderzeugs 10 bestimmt worden ist, welcher insbesondere zentral zwischen den beiden ungelenkten Rädern 14a und 14b liegt. Ferner dient als Radius dieses Viertelkreises ein Abstand des Mittelpunkts A zu einem vorderen Außenpunkt P des Flurförderzeugs. Während des Filterns werden nunmehr lediglich innerhalb dieses derart konstruierten Viertelkreises liegende Objekte in den weiteren Verfahrensschritten in Betracht gezogen, d.h. in diesem Fall die Objekte obj1 bis obj3.

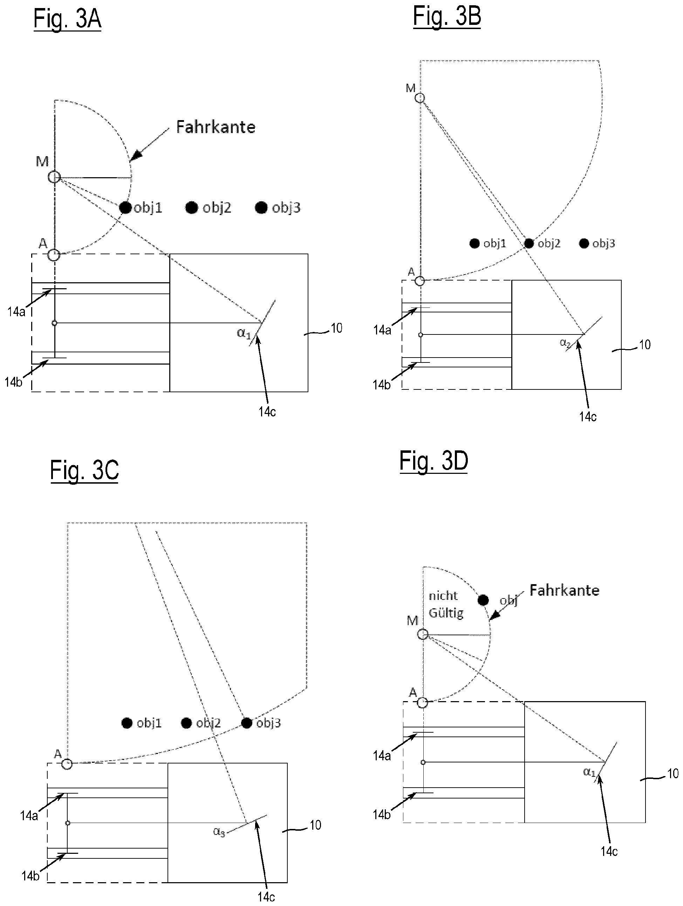

Die Figuren 3A bis 3C zeigen nunmehr drei Ansichten zum Bestimmen jeweiliger zulässiger maximaler Lenkwinkel zu den drei bestimmten Objekten obj1 bis obj3 an einer entsprechenden Seite des Flurförderzeugs 10, während die Figur 3D einen Fall zeigt, in welchem ein Objekt obj in einem nicht gültigen Bereich liegt und demnach ignoriert werden kann. Hierbei wird anhand eines Einspur-Bewegungsmodells des Flurförderzeugs 10 eine Fahrkante konstruiert, welche bei einer Kurvenfahrt des Flurförderzeugs 10 einer Kreisbahn entspricht.

Die entsprechende Konstruktion dieser Kreisbahn wird abhängig von dem oben bereits erläuterten Schnittpunkt A einer Außenkante des Flurförderzeugs und einer senkrechten Projektion zu dem Drehpunkt F für ein Ableiten des jeweiligen Lenkwinkels α1 bis α3 durchgeführt, wobei hierzu ferner abhängig von dem entsprechenden Lenkwinkel α1 bis α3 ein Mittelpunkt der entsprechenden kreisförmigen Bewegungsbahn zugrunde gelegt wird.

Stellt sich hierbei, wie in Figuren 3D angedeutet, heraus, dass ein entsprechendes Objekt obj in einer dem Flurförderzeug 10 abgewandten Hälfte des derart konstruierten Kreises liegt, so wird das entsprechende Objekt nicht berücksichtigt. Aus den auf diese Weise ermittelten drei Lenkwinkeln α1 bis α3, welche jeweils einem der Objekte obj1 bis obj3 zugeordnet sind, wird der geringste zulässige maximale Lenkwinkel α3 als kritischer Lenkwinkel bestimmt, welcher dem weiteren Verfahrensablauf zugrunde gelegt wird.

Wie nun nämlich in Figur 4 schematisch dargestellt ist, wird aus den drei genannten zulässigen maximalen Lenkwinkeln α1 bis α3 das Minimum ermittelt und mit dem durch den Lenkwinkelsensor 22 ermittelten aktuellen Lenkwinkel α des Fahrzeugs 10 verglichen. Sollte hierbei der aktuelle Lenkwinkel α des Flurförderzeugs 10 größer sein als der kritische Lenkwinkel α3, so wird eine vorbestimmte Maßnahme bei dem Flurförderzeug 10 ausgelöst, beispielsweise eine Benachrichtigung der entsprechenden Bedienperson und/oder ein Steuer- und/oder Bremseingriff in einer automatischen Weise.

## Patentansprüche

1. Verfahren zur Behandlung von Hindernissen (H) in einem Flurförderzeug (10) während eines Fahrbetriebs davon, umfassend die Schritte:
- während einer Fortbewegung des Flurförderzeugs (10) entlang einer Fortbewegungsrichtung:
∘ Erfassen der Umgebung des Flurförderzeugs (10) an wenigstens einer Seite senkrecht zu der Fortbewegungsrichtung mittels wenigstens einer Sensoreinheit (18), welche dazu eingerichtet ist, Objekte (obj1 - obj3) und jeweilige Abstände (y1) davon zu dem Flurförderzeug (10) zu bestimmen;
o Erfassen eines zurückgelegten Wegs mittels einer Wegbestimmungseinheit (20);
- bei einem Bestimmen eines Vorliegens eines Objekts (obj1 - obj3):
∘ Speichern des seitlichen Abstands (y1) des Objekts (obj1 - obj3) in einer Speichereinheit (26) und zumindest eine Information über die Position oder einen Positionsbereich des Objekts (obj1 - obj3) bezogen auf den zurückgelegten Weg des Flurförderzeugs (10), wobei das Speichern insbesondere für einen nicht durch die Sensoreinheit (18) erfassten Bereich der Umgebung des Flurförderzeugs (10) erfolgt;
o Bestimmen eines jeweiligen zulässigen maximalen Lenkwinkels (α1 - α3) zu wenigstens einem Teil der gespeicherten Objekte (obj1 - obj3) anhand der gespeicherten Abstände und einem vorbestimmten Bewegungsmodell des Flurförderzeugs (10);
∘ Auswählen des geringsten der zulässigen maximalen Lenkwinkel (α1 - α3) als kritischen Lenkwinkel (α3); und
∘ Vergleichen des kritischen Lenkwinkels (α3) mit einem momentanen Lenkwinkel (α) des Flurförderzeugs (10), welcher mittels eines Lenkwinkelsensors (22) bestimmt wird, und
- falls der momentane Lenkwinkel (α) des Flurförderzeugs (10) größer als der kritische Lenkwinkel (α3) ist, Auslösen wenigstens einer vorbestimmten Maßnahme.

2. Verfahren nach Anspruch 1,
wobei die Umgebung des Flurförderzeugs (10) an der wenigstens einen Seite des Flurförderzeugs, insbesondere an beiden Seiten, in eine Mehrzahl von Abschnitten (dx) einer vorbestimmten Länge bezogen auf den zurückgelegten Weg als Positionsbereich unterteilt wird, für welche jeweils das Vorliegen eines Objekts (obj1 - obj3) und der entsprechende Abstand (y1) oder eine Abwesenheit eines Objekts (obj1 - obj3) bestimmt und ggf. gespeichert werden.

3. Verfahren nach Anspruch 2,
wobei bei einem Bestimmen eines Vorliegens von mehreren Objekten (obj1 - obj3) innerhalb eines einzelnen Abschnitts (dx) lediglich der Abstand (y1) des bezogen auf das Flurförderzeug (10) am nächsten liegenden Objekts (10) gespeichert wird

4. Verfahren nach einem der vorhergehenden Ansprüche,
wobei sobald der zurückgelegte Weg bezogen auf ein bestimmtes Objekt (obj1 - obj3) eine Länge des Flurförderzeugs (10) übersteigt, dieses Objekt (obj1 - obj3) aus der Speichereinheit (26) gelöscht wird.

5. Verfahren nach einem der vorhergehenden Ansprüche,
ferner umfassend ein Filtern der bestimmten Objekte (obj1 - obj3) anhand geometrischer Eigenschaften des Flurförderzeugs (10).

6. Verfahren nach dem vorhergehenden Anspruch,
wobei für das Filtern an der entsprechenden Seite ein Viertelkreis konstruiert wird, wobei der Mittelpunkt des Viertelkreises durch einen Schnittpunkt (A) einer Außenkante des Flurförderzeugs (10) und einer senkrechten Projektion zu einem Drehpunkt (F) des Flurförderzeugs (10) bestimmt wird und als Radius ein Abstand dieses Mittelpunkts (A) zu einem vorderen Außenpunkt (P) des Flurförderzeugs (10) dient.

7. Verfahren nach einem der vorhergehenden Ansprüche,
wobei als das vorbestimmte Bewegungsmodell des Flurförderzeugs (10) ein Einspur-Modell verwendet wird.

8. Verfahren nach einem der vorhergehenden Ansprüche,
wobei das Auslösen der wenigstens einen vorbestimmten Maßnahme eine Benachrichtigung einer Bedienperson mittels einer entsprechenden Benachrichtigungseinheit und/oder einen Steuer- und/oder Bremseingriff des Flurförderzeugs (10) umfasst.

9. Flurförderzeug (10), umfassend:
- einen Fahrzeugkörper (12) mit wenigstens drei daran vorgesehenen Rädern (14a - 14c);
- ein Lastaufnahmemittel (16);
- wenigstens eine Sensoreinheit (18), welche dazu eingerichtet ist, Objekte (obj1 - obj3) und jeweilige Abstände (y1) davon zu dem Flurförderzeug (10) in einer Richtung senkrecht zu einer Haupt-Fortbewegungsrichtung (L) zu bestimmen, wobei insbesondere ein Blindbereich neben dem Flurförderzeug (10) nicht durch eine Sensoreinheit (18) erfasst wird;
- eine Wegbestimmungseinheit (20);
- einen Lenkwinkelsensor (22); und
- eine mit der wenigstens einen Sensoreinheit (18), der Wegbestimmungseinheit (20) und dem Lenkwinkelsensor (22) betriebsmäßig gekoppelte Steuereinheit (24), welcher eine Speichereinheit (26) zugeordnet ist,
wobei das Flurförderzeug (10) dazu eingerichtet ist, ein Verfahren nach einem der vorhergehenden Ansprüche durchzuführen.

10. Flurförderzeug (10) nach dem vorhergehenden Anspruch,
ferner umfassend eine mit der Steuereinheit (24) betriebsmäßig gekoppelte Benachrichtigungseinheit, welche dazu eingerichtet ist, als die wenigstens eine vorbestimmte Maßnahme eine Warnung an eine Bedienperson des Flurförderzeugs (10) auszugeben.

11. Flurförderzeug nach Anspruch 8 oder 9,
wobei die Steuereinheit (24) ferner dazu eingerichtet ist, als die wenigstens eine vorbestimmte Maßnahme einen Steuer- und/oder Bremseingriff des Flurförderzeugs (10) anzuweisen.

12. Flurförderzeug nach einem der Ansprüche 8 bis 10,
wobei die wenigstens eine Sensoreinheit (18) als ein Laserscanner ausgebildet ist, welcher vorzugsweise einen Bereich von etwa 180° bezogen auf die Haupt-Fortbewegungsrichtung (L) des Flurförderzeugs (10) erfasst.
